# EUROPÄISCHE PATENTSCHRIFT

(11) **EP 4 086 609 B1**
(45) Veröffentlichungstag und Bekanntmachung des Hinweises auf die Patenterteilung: **28.08.2024**
(21) Anmeldenummer: 22171340.7
(22) Anmeldetag: 03.05.2022
(51) Int. Cl.: G01N 3/32

(54) **MATERIALANALYSEGERÄT MIT SCHNELLBEFESTIGUNG**
MATERIAL ANALYZER WITH QUICK ATTACHMENT
APPAREIL D'ANALYSE DES MATÉRIAUX À FIXATION RAPIDE

(30) Priorität: 05.05.2021 DE 102021111641
(43) Veröffentlichungstag der Anmeldung: 09.11.2022
(60) Teilanmeldung: 23160087.5
(73) Patentinhaber: Netzsch Gerätebau GmbH, 95100 Selb (DE)
(72) Erfinder: Neumann, Georg, 95173 Schönwald (DE); Zier, Marco, 95686 Fichtelberg (DE); Biermann, Patrick, 30926 Seelze (DE); Tschöpel, Jürgen, 95659 Arzberg (DE); Wurpts, Wiebold, 29690 Schwarmstadt (DE); Hilmer, Markus, 31275 Lehrte (DE); Faulhammer, Leonhard, 95100 Selb (DE); Lauer, Stephan, 30900 Wedemark (DE); Dinges, Kai, 29690 Grethem (DE); Luhmann, Claas, 30916 Isernhager (DE); Bellmann, Michel, 30900 Wedemark (DE); Storch, Georg, 95100 Selb (DE); Gschwendtner, Reinhard, 95615 Marktredwitz (DE)

(56) Entgegenhaltungen:
- NETZSCH: "Analyzing & Testing Dynamic Mechanical Analysis - DMA 242 E Artemis", 1 February 2020 (2020-02-01), pages 1 - 24, XP055966717, Retrieved from the Internet <URL:https://www.nexus-analytics.com.my/wp-content/uploads/2020/11/Brochure_DMA_242_E_Artemis.pdf> [retrieved on 20220930]

## Beschreibung

Die Erfindung betrifft ein Materialanalysegerät nach dem Oberbegriff des Anspruchs 1 mit einer Schnellbefestigung für den Probenhalter.

### TECHNISCHER HINTERGRUND

Geräte wie das erfindungsgemäße kommen nicht nur, aber bevorzugt für die dynamisch-mechanische Analyse zum Einsatz. Die dynamisch-mechanische Analyse DMA ist eine unentbehrliche Methode zur Bestimmung der viskoelastischen Eigenschaften von hauptsächlich polymeren Werkstoffen. Hier sind Materialanalysegeräte gefragt, die ein modulares Design besitzen. Dieses modulare Design soll es insbesondere auch ermöglichen, das Gerät mit einer Vielzahl unterschiedlicher Probenhalter und unterschiedlicher Fühlstempel zu betreiben. So gelingt es, mit einem Gerät nahezu alle denkbaren Lastfälle zu simulieren. Bisher werden diese Probenhalter und die zugehörigen Fühlstempel jeweils in das Materialanalysegerät eingeschraubt. Schraubverbindungen sind sicher, können zuverlässig die nötigen Kräfte übertragen und lassen sich auch schnell herstellen und wieder lösen.

Die Publikation Netzsch, "Analyzing & Testing Dynamic Mechanical Analysis - DMA 242 E Artemis", (20200201), Seiten 1 - 24, URL: https://www.nexus-analytics.com.my/wpcontent/uploads/2020/11/Brochure_DMA_242_E_Artemis.pdf, (20220930), XP055966717 beschreibt ein Materialanalysegerät zur Bestimmung der viskoelastischen Eigenschaften von hauptsächlich Polymermaterialien.

### DIE DER ERFINDUNG ZUGRUNDE LIEGENDE AUFGABE

Obwohl die bisher bekannten Materialanalysegeräte gut und zuverlässig funktionieren und sich auch relativ gut umrüsten lassen, ist eine weitere Verkürzung der Rüstzeiten für ein solches Materialanalysegerät wünschenswert.

### DIE ERFINDUNGSGEMÄSSE LÖSUNG

Die Lösung der genannten Aufgabe erfolgt mit den Merkmalen des Anspruchs 1 in ihrer Gesamtheit.

Demnach wird ein Materialanalysegerät zu Analyse einer Werkstoffprobe vorgeschlagen, das bevorzugt mit einer von ihrer Oberseite her beladbaren, und im letztgenannten Fall durch einen Deckel verschließbaren, zumeist temperierbaren Probenkammer ausgestattet ist. Es besitzt einen mittels ein, zwei oder mehr Säulen in Position gehaltenen Probenhalter, vorzugsweise ist der Probenhalter mittels Säulen am Deckel aufgehängt. Dabei kommen zur Positionierung des Probenhalters oft zwei oder besser sogar mehrere Säulen zum Einsatz, die den Probenhalter tragen. Im bevorzugten Fall der Beladbarkeit von oben her lassen die Säulen den Probenhalter vom Deckel herab in die Probenkammer hineinragen.

Darüber hinaus verfügt das Materialanalysegerät über einen Belastungsstempel. Dieser wird an seinem einen Ende von einem Erreger mit Kraft beaufschlagt. An seinem anderen Ende trägt der Belastungsstempel einen Fühlstempel, den der Praktiker vielfach auch als "an die Probengeometrie angepassten Einsatz" bezeichnet, wobei im Folgenden aus Gründen der Einheitlichkeit der patentrechtliche Begriff "Fühlstempel" beibehalten wird. Mit diesem überträgt er in definierter Art und Weise Kraft auf die Probe. Hierdurch belastet er diese.

Erfindungsgemäß zeichnet sich das Materialanalysegerät dadurch aus, dass der Belastungsstempel an seinem der Probenkammer zugewandten Ende eine Muffe ausbildet. Diese Muffe nimmt in betriebsfertigem Zustand einen Einsteckabschnitt des Fühlstempels in sich auf. Dabei besitzt diese Muffe zumindest ein seitliches Fenster. Durch dieses seitliche Fenster hindurch kann ein Keil, vorzugsweise in Gestalt eines Flachkeils mit einer ebenen Keilfläche, in die dahinter liegende Nut am Einsteckabschnitt eingeschoben werden. Der Keileinschub erfolgt typischerweise in rein radialer Richtung, bezogen auf die Längsachse des Fühlstempels.

Auf diese Art und Weise kann der Fühlstempel formschlüssig spielfrei am Belastungsstempel verankert werden. Diese Keilverbindung hat den großen Vorteil, dass sie sich schnell lösen und herstellen lässt, im Regelfall werkzeuglos. Bei geeigneter, zwangsweiser Vorspannung wird sie zudem immer von alleine korrekt hergestellt. Damit wird nicht nur die Rüstzeit verkürzt, sondern gegebenenfalls auch die Betriebssicherheit vergrößert. Denn es gibt keine Probleme mehr mit versehentlich nicht korrekt angezogenen Schraubverbindungen. Es besteht auch keine oder - verglichen mit einer Schraubverbindung - nur eine geringere Gefahr, dass sich die Keilverbindung ungewollt löst.

### OPTIONALE AUSGESTALTUNGSMÖGLICHKEITEN DER ERFINDUNG

Idealerweise bildet die Muffe des Belastungsstempels einen ersten Zentrierkegel aus, vorzugsweise in Gestalt eines Zentrierkegelsitzes. Dieser zentriert im Zusammenspiel mit einem zweiten, vorzugsweise männlichen Zentrierkegel, der am Einsteckabschnitt des Fühlstempels ausgebildet ist, letzteren gegenüber dem Belastungsstempel. Zu diesem Zweck ist der Keil vorzugsweise so gestaltet, positioniert und vorgespannt, dass er die beiden Zentrierkegel ineinander zieht, die, bevorzugt in Richtung des Probenraums gesehen, unterhalb von ihm angebracht sind. Auf diese Art und Weise sorgt die erfindungsgemäße Schnellbefestigung zwangsweise für eine optimale Zentrierung.

Besonders günstig ist es, wenn an der Außenseite des Belastungsstempels eine Biegefeder befestigt ist. Diese Biegefeder spannt den Keil in radialer Richtung hin zum Belastungsstempel vor. Die Biegefeder ist bevorzugt nach Art einer an nur einem ihrer Enden festgelegten Blattfeder ausgestaltet.

Dabei ist der Keil an seinem auswärtigen Ende vorzugsweise derart mit der Blattfeder verbunden, dass diese auch Zugkräfte auf ihn übertragen kann. Dadurch wird die Blattfeder zum universellen Betätigungsorgan für den Keil, in beide Richtungen. Durch ihre naturgemäß nicht unbeträchtliche Größe ermöglicht sie auch ein leichtes Wiederlösen des Keils. Insbesondere kann die Blattfeder gut motorisch betätigt werden und zwar in der überwiegenden Zahl der Fälle, ohne dass dazu ein zusätzlicher Motor erforderlich ist.

Zu letzterem Zweck ist es besonders günstig, wenn die Blattfeder ein verlängertes, vorzugsweise radial schräg nach außen gekröpftes freies Ende aufweist, das in Richtung der Längsachse des Belastungsstempels über den Keil hinausragt. Man kann dieses verlängerte Ende, dem letztendlich selbst eine Keilwirkung zukommt, dazu benutzen, um es beim immer weiter Einfahren des Belastungsstempels in den Probenraum gegen einen Anschlag anlaufen zu lassen. Der Anschlag ist dann so gestaltetet und positioniert, dass die Belastungsfeder an dem Anschlag hängenbleibt und beim Weitereinfahren nach außen gespreizt wird.

Sie zieht den Keil dann derart aus der Nut heraus, dass der Fühlstempel vom Belastungsstempel abgenommen werden kann.

### EINE WEITERE ERFINDUNGSGEMÄSSE LÖSUNG

Zusammen mit den bisher geschilderten Anspruchsmerkmalen, aber auch alleine, unabhängig nur mit den Merkmalen nach dem Oberbegriff des Anspruchs 1, wird auch Schutz für ein Materialanalysegerät beansprucht, dessen Probekammerwand bzw. Deckel für mehrere Säulen des Probenhalters jeweils eine Halteöffnung aufweist. In diese Halteöffnung kann das freie Ende der jeweiligen Säule eingeschoben werden. Dabei trägt das freie Ende der betreffenden Säule eine Nut. In diese kann ein beweglich im Deckel gelagerter Keil - vorzugsweise in rein radialer Richtung, bezogen auf die Längsachse der Säule - eingeschoben werden.

Auf diese Art und Weise kann das Ende der betreffenden Säule formschlüssig spielfrei an der Probekammerwand bzw. am Deckel verankert werden, im Regelfall werkzeuglos. Da auch diese Verankerung im Wesentlichen vom gleichen Typ ist, wie die für den Fühlstempel benutzte, hat auch sie die dort genannten Vorteile.

### WEITERE OPTIONALE AUSGESTALTUNGSMÖGLICHKEITEN DER ERFINDUNG

Besonders günstig ist es, wenn die Halteöffnung ganz oder teilweise als ein zum Probenraum hin - sprich also im Regelfall nach unten - offenes Sackloch ausgeführt ist. Die Ausführung dieses Sacklochs erfolgt dann im Regelfall derart, dass der im Deckel gelagerte Keil das freie Ende der ihm zugeordneten Säule zwischen seiner Keilfläche und dem Grund des Sacklochs verspannt. Anders als beim Fühlstempel kommt es hier im Regelfall nicht auf eine Zentrierung an. Daher kann die Verbindung einfacher ausgeführt werden als die für den Fühlstempel beschriebene.

Idealerweise ist in die Probekammerwand bzw. den Deckel eine Synchronbetätigungsmimik integriert. Diese ist so gestaltet, dass sie alle Keile der verschiedenen Säulen eines konkreten Probenhalters synchron betätigt, d. h. synchron in die Nuten der Säulen einschiebt oder aus ihnen herauszieht. Eine solche Synchronbetätigungsmimik führt zu einer ganz erheblichen Zeitersparnis beim Rüsten, verglichen mit dem bisherigen Zustand, bei dem mehrere Schraubverbindungen nacheinander gelöst werden müssen, um den jeweiligen Probenhalter ein- und auszubauen.

Bevorzugt weist die Synchronbetätigungsmimik einen Drehexzenter auf. Bei entsprechender Drehung übt dieser eine Druckkraft auf den mindestens einen ersten Keil aus, die diesen in eine Nut einer Säule zwängt. Gleichzeitig wird Zug auf einen Verschieberahmen ausgeübt. Wenn dieser hierdurch in eine andere Position gezogen wird, dann übt er seinerseits eine Druckkraft auf mindestens einen zweiten Keil aus. Die Druckkraft zwängt diesen in eine Nut einer anderen Säule. Bei entsprechender Drehung in entgegengesetzter Richtung gibt der Drehexzenter die besagten Keile frei, sodass diese sich wieder zurückbewegen können. Alternativ ist der Drehexzenter so mit den Keilen zwangsgekoppelt, dass er diese aktiv zurückzieht.

Besonders günstig ist es zu diesem Zweck, wenn die Keile nicht unmittelbar, sondern über Federelemente mit dem Exzenter und dem Verschieberahmen kommunizieren. Besonders günstige Federelemente sind hierbei Biegestabfedern. Denn über solche Biegestabfedern kann besonders gut nicht nur eine Druckkraft, sondern auch eine Zugkraft auf die Keile ausgeübt werden, im Sinne einer echten Zwangsbetätigung. Das führt zu einem besonders problemlosen Lösen.

### FIGURENLISTE

Die Figur 1 zeigt das erfindungsgemäße Materialanalysegerät im betriebsfertigen Zustand und gibt einen Überblick.
Die Figur 2 zeigt das erfindungsgemäße Materialanalysegerät im betriebsfertigen Zustand von der Seite, aus einer gegenüber der Figur 1 um 90° gedrehten Betrachter-Position.
Die Figur 3 zeigt einen Detailausschnitt mit einem Ausführungsbeispiel, das gut sichtbar macht, wie der Fühlstempel erfindungsgemäß mit dem Belastungsstempel verbunden ist.
Die Figur 4 zeigt einen Überblick, auf welche Art und Weise der Fühlstempel gelöst werden kann.
Die Figur 4a zeigt mithilfe einer verkleinerten Abbildung den gelösten und in Trennung von dem Materialanalysegerät begriffenen Fühlstempel.
Die Figur 5 zeigt den Betätigungsmechanismus im Fühlstempel in betriebsbereiter Position.
Die Figur 6 zeigt den Betätigungsmechanismus für den Fühlstempel beim Lösen des Fühlstempels.
Die Figur 7 zeigt die erfindungsgemäße Befestigung der Säulen des Probenhalters am Deckel des Probenraums.
Die Figur 8 zeigt einen Ausschnitt aus der Figur 7.
Die Figur 9 zeigt die Befestigung gemäß Figur 7 im gelösten Zustand.
Die Figur 10 zeigt einen Ausschnitt aus der Figur 9.
Die Figur 11 zeigt ein Ausführungsbeispiel der erfindungsgemäßen Synchronbetätigungsmimik für die Säulen der Probenhalter.
Figur 12 zeigt ein Ausführungsbeispiel der erfindungsgemäßen Synchronbetätigungsmimik für die Säulen der Probenhalter, aber teilweise freigeschnitten, sodass man die Keile und deren Betätigung besser erkennen kann.

### AUSFÜHRUNGSBEISPIELE

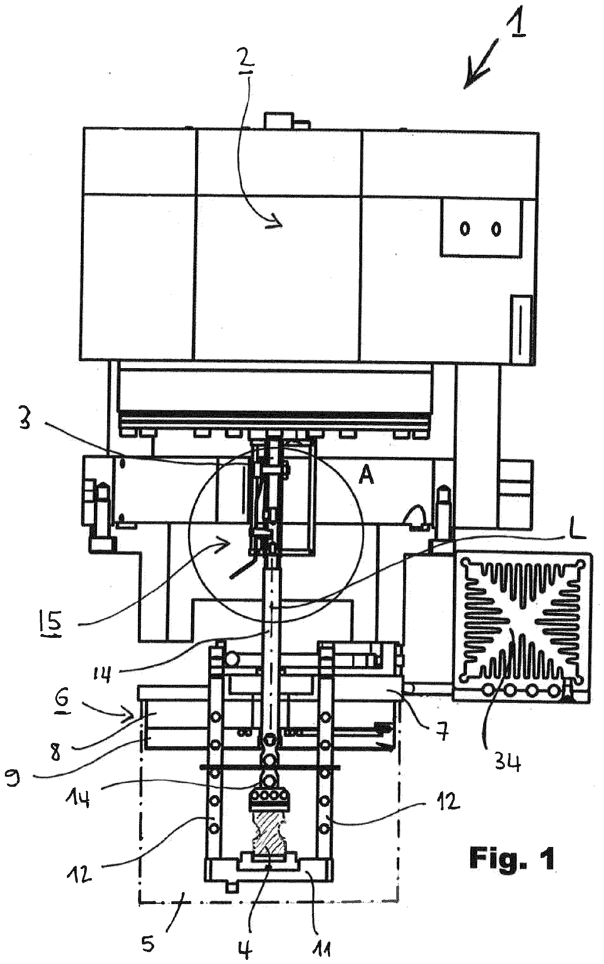

Die Figur 1 gibt einen guten Überblick über das erfindungsgemäße Materialanalysegerät 1.

Das Materialanalysegerät 1 umfasst einen Schwingungserreger 2. Der Schwingungserreger 2 beaufschlagt einen Belastungsstempel 3 mit Schwingungen. Diese Schwingungen überträgt dieser an eine Probe 4, die hier nur ganz allgemein zeichnerisch angedeutet ist.

Das Materialanalysegerät 1 umfasst darüber hinaus eine Probenkammer 5, die in Figur 1 nur angedeutet dargestellt ist. Diese Probenkammer 5 ist im Betrieb mittels eines Deckels 6 im Wesentlichen verschlossen. In der Probenkammer können die gewünschten Prüftemperaturen hergestellt werden. Optional ist es zusätzlich möglich, Strahlung auf dem Prüfling aufzubringen, etwa UV-Strahlung. Gegebenenfalls ist noch eine Benebelung oder eine Dampfbeaufschlagung mit beispielsweise korrosiv wirkenden oder das Kunststoffmaterial in sonstiger Form angreifenden bzw. beeinflussenden Flüssigkeiten möglich. Ähnliche Verhältnisse können optional auch mithilfe eines Eintauchens in ein entsprechendes Tauchbad realisiert werden.

Recht gut anhand der Fig. 1 ist auch zu erkennen, dass bei diesem Ausführungsbeispiel ein Bereich außerhalb der Probenkammer zwischen Probenkammer und dem Messsystem selbsttätig durch ein auf Wärmerohrtechnologie basierendes Kühlsystem gekühlt wird. Zu diesem Zweck liegt oberhalb der Isolation 8 und damit zwischen der Probenkammer und dem Messsystem eine Trägerplatte 7, die vorzugsweise als Kühlplatte ausgestaltet ist. Die Trägerplatte 7 kann, wie hier zeichnerisch dargestellt, eine Lage des mehrlagigen Deckels 6 sein, sie kann aber auch völlig unabhängig vom Deckel 6 sein, was hier nicht figülich dargestellt ist.

Die Kühlplatte 7 beseitigt oder reduziert die Belastung des hier oberhalb der Probenkammer liegenden Messsystems durch Wärme aus der Probenkammer. Die Kühlplatte 7 wird vorzugsweise von fluidischem Kühlmittel durchströmt, das über ein Kühlgerät 34 rückgekühlt wird. Die Kühlplatte 7 kann aber auch nach Art einer "Heatpipe" funktionieren, wie sie beim Laptopbau eingesetzt wird.

Besonders günstig ist es, die Kühlung so zu realisieren, dass die Kühlplatte 7 mit einer meist radialen Bohrung versehen wird. In diese Bohrung wird eine rohrförmige Heatpipe eingesetzt, meist unter Verwendung einer Wärmeleitpaste, um einen optimalen Wärmeübergang herzustellen. Die verwendete Heatpipe ist länger als die sie in der Kühlplatte aufnehmende Bohrung. Sie ragt also seitlich aus der Kühlplatte 7 heraus. Wie man zum Beispiel recht gut anhand der Fig. 1 sehen kann, reicht der seitlich aus der Kühlplatte 7 herausragende Teil bis in das Kühlgerät 34 hinein. Er wird dort von einer Nut oder Bohrung in einem typischerweise verrippten Kühlkörper aufgenommen, der seinerseits als Wärmesenke dient und typischerweise von einem Gebläse mit Kühlluft bestrichen wird.

Eine solche "Heatpipe" bzw. ein Wärmerohr der hier verwendeten Art ist typischerweise hermetisch dicht und nicht zerstörungsfrei öffenbar.

Das Wärmerohr ist typischerweise so gestaltet, dass in ihm allein durch Temperaturdifferenz getrieben, eventuell durch eine Kapillarwirkung unterstützt, ein Fluid umläuft, das Wärme an einem Ende des Wärmerohrs aufnimmt, zum anderen Ende des Wärmerohrs transportiert und dann dort nach außen abgibt.

Geht man zu dem erfindungsgemäß verwendeten Wärmerohr noch etwas genauer ins Detail, dann lässt sich zu den bevorzugt zu verwendenden Wärmerohren Folgendes sagen:
Die Kühlplatte 7 führt unvermeidlich einen gewissen Wärmestrom, nämlich der Verlustwärme, die die Isolation 8 überwinden konnte. Der Wärmeeintrag im Bereich der Kühlplatte erhöht die Temperatur des das Wärmerohr bildenden Gefäßes, typischerweise ein Kupferrohr, und des darin befindlichen Arbeitsmediums so lange, bis der Siedepunkt des Arbeitsmediums erreicht ist. Das Arbeitsmedium beginnt nun zu verdampfen. Die Temperatur steigt nicht mehr, die gesamte weiter zugeführte Energie wird stattdessen in Verdampfungswärme umgesetzt.

Dadurch wird über dem Flüssigkeitsspiegel der Druck im Wärmerohr lokal erhöht, was zu einem geringen Druckgefälle innerhalb des Wärmerohrs führt. Der entstandene Dampf beginnt, sich im gesamten verfügbaren Volumen zu verteilen, d. h. er strömt überall dahin, wo der Druck niedriger ist; an den Stellen, wo seine Temperatur den Siedepunkt des Arbeitsmediums unterschreitet, kondensiert er. Dazu muss der Dampf Energie an das Gefäß und das Gefäß an die Umgebung abgeben. Am stärksten geschieht dies an der Stelle, wo der Kondensator liegt, in dem aktiv gekühlt werden kann, also im Bereich des Kühlgeräts 34.

Die Temperatur sinkt nun nicht mehr, bis die gesamte enthaltene Latentwärme, die Kondensationswärme, an die Umgebung abgegeben worden ist.

Der jeweils flüssige Anteil des Arbeitsmediums kehrt durch die Kapillarkräfte zum Verdampfer zurück, die das typischerweise in dem hier als Wärmerohr verwendeten Rohr eingebaute Metallgeflecht entwickelt. Alternativ kann auch ein Rohr als Wärmerohr verwendet werden, dessen Innenseite nicht glattflächig ist, sondern mit in Richtung der Rohrlängsachse verlaufenden Rippen versehenen ist, die zwischen sich Freiräume einschließen, die man als Kapillarnuten betrachten kann.

Vorzugsweise ist die Isolation 8 eine hochtemperaturbeständige Platte aus anorganischem Material, meist auf der Basis von disperser, amorpher Kieselsäure. Oft wird diese Platte auch spezielle Infrarot-Trübungsmittel aufweisen, sodass auch in der Probenkammer 5 anfallende Infrarotstrahlung die Isolation nicht ohne weiteres überwinden kann. Auf der einen Seite der Isolation 8, in der Probenkammer, ist meist eine sogenannte Deckelheizung 9 angeordnet, die der Temperierung der Probenkammer dient.

Die Probe wird in der Probenkammer 5 mithilfe eines Probenhalters 10 in Position gehalten. Der Probenhalter 10 besteht meist aus einer Art Probentisch bzw. einem Probenquerträger 11. Dieser ist seinerseits mithilfe von Säulen 12 in Position gehalten. Zu diesem Zweck ist auf der Außenseite des Deckels eine Säulenverankerung 13 angeordnet. Diese umfasst vorzugsweise eine Synchronbetätigungsmimik, wie sie später noch näher beschrieben wird. Die Säulen ragen durch ihnen zugeordnete Durchgangsöffnungen im Deckel durch diesen hindurch, bis in den Bereich der Säulenverankerung 13 hinein.

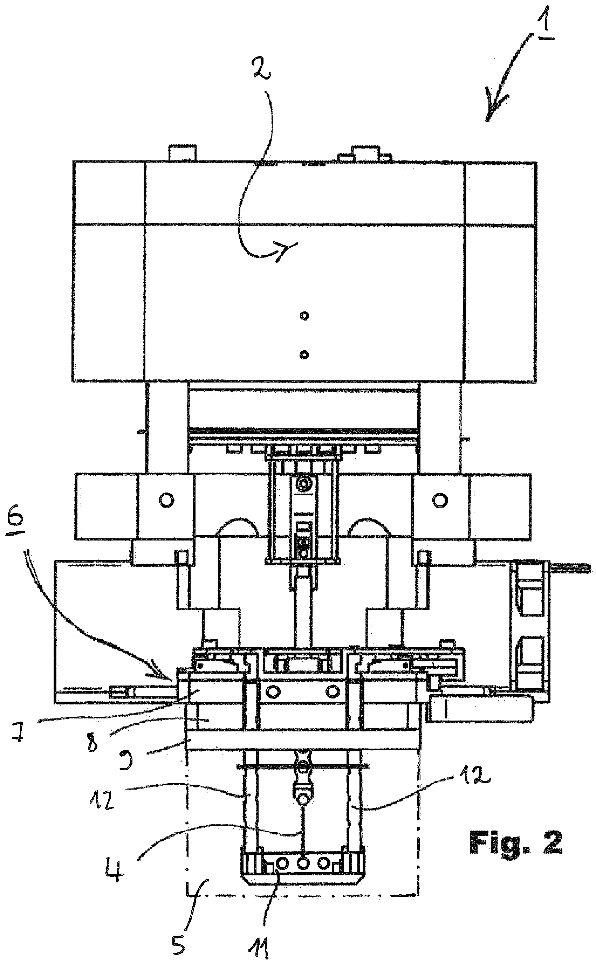

Gut zu erkennen ist auch, dass der Belastungsstempel 3 die ihm von dem Schwingungserreger 2 mitgeteilten Schwingungen nicht unmittelbar auf die Probe aufbringt, sondern über einen an ihn angekoppelten Fühlstempel 14. Die Kupplung, die hier den Belastungsstempel mit dem Fühlstempel 14 koppelt, trägt die Bezugsziffer 15. Die Kupplung 15 ist in den Fig. 1 und 2 nur grob zu erkennen und wird später noch näher erläutert. Der Fühlstempel 14 ragt durch eine ihm zugeordnete Durchgangsöffnung des Deckels durch diesen hindurch bis in den Bereich der Probenkammer 5 hinein.

Bemerkenswert ist, dass der Fühlstempel 14 vorzugsweise zumindest in dem Bereich, mit dem er in die Probenkammer 5 hineinragt, hohl gebohrt ist. Typischerweise weist er auch zusätzlich eine Anzahl radialer Fenster auf. Auf diese Art und Weise wird der für die Wärmeleitung am Fühlstempel 14 zur Verfügung stehende Querschnitt gering gehalten, über den Wärme aus dem Probenraum entlang des Fühlstempels bis in einen Bereich außerhalb des Probenraums abfließen kann.

Ähnlich im Hinblick auf ihre verminderte Wärmeleitfähigkeit sind vorzugsweise auch die Säulen 12 ausgebildet, die den Probentisch bzw. Probenquerträger 11 halten. Dies hat den gleichen Grund, wie für den Fühlstempel geschildert.

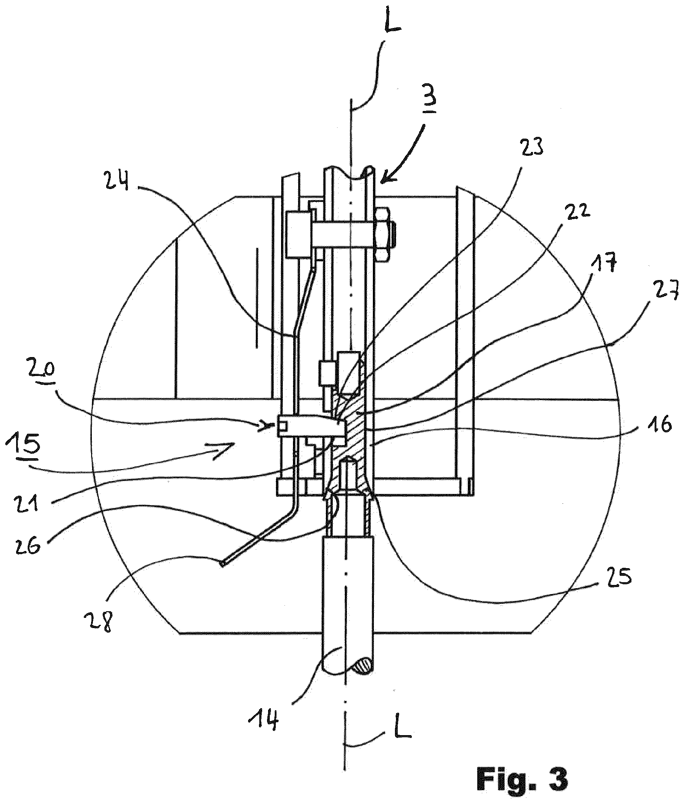

Die Figur 3 zeigt die Kupplung 15 und stellt damit im Einzelnen dar, wie der Fühlstempel 14 an den Belastungsstempel 3 angekoppelt ist.

Gut zu erkennen ist der hier zumindest an seinem dem Fühlstempel zugewandten Ende innen hohle Belastungsstempel 3. Dieses hohle Ende bildet eine Muffe 16 aus. Im vorliegenden Fall trägt der Fühlstempel 14 an seinem Ende ein in diesem Fall männliches Kupplungsstück 17. Diese Gestaltung ist besonders zweckmäßig, weil dann der Keil zum Abkuppeln nicht vollständig aus dem ihm zugeordneten Fenster herausgezogen werden muss.

Zweckmäßigerweise ist das Kupplungsstück 17 auf den Fühlstempel 14 aufgeschraubt. Anders als der Fühlstempel 14, wird das Kupplungsstück 17 im Regelfall massiv sein. Das Kupplungsstück 17 wird zum Ankuppeln in die Muffe 16 des Belastungsstempels 3 eingeschoben. Wie man sieht, besitzt das Kupplungsstück 17 eine radial von der Seite her zugängliche Nut 18. In vollständig angekoppeltem Zustand kommt die Nut 18 hinter einem Fenster 19 in der Muffe 16 zu liegen. Durch das Fenster hindurch wird ein Keil 20 eingeschoben.

Der Keil 20 kann als Rundkeil oder, was klar bevorzugt ist, als Flachkeil ausgeführt werden.

Der Flachkeil ist hier figürlich dargestellt. Der Flachkeil besitzt hier eine plane, rein radial ausgerichtete untere Gleitfläche 21. Dieser gegenüberliegend besitzt er eine meist ebenfalls plane, schräg verlaufende Keilfläche 22. Die Keilfläche 22 interagiert mit einer Gegenkeilfläche 23 am Kupplungsstück 17.

Der Keil 20 wird durch ein Federelement, das hier vorzugsweise durch die Blattfeder 24 gebildet wird, in radialer Richtung zum Kupplungsstück 17 hin vorgespannt. Das bedeutet, dass die Blattfeder 24 den Keil 20 in die Nut 18 hineinzwängt. Durch das Aufeinander-Abgleiten der Keilfläche 22 des Keils 20 und der Gegenkeilfläche 23 des Kupplungsstücks einerseits und andererseits der Abstützung des Keils 20 mit seiner unteren Gleitfläche 21 an dem Rand des Fensters 19 wird das Kupplungsstück 17 tendenziell tiefer in die Muffe 16 des Belastungsstempels hineingezogen. Dadurch kommt es zur automatischen Zentrierung. Denn der Außenkegel 25 des Kupplungsstücks 17 wird hierdurch in den Kegelsitz 26 ganz am Ende der Muffe 16 des Belastungsstempels 3 eingezogen. Auf diese Art und Weise wird das, wenngleich meist geringe, Spiel unschädlich gemacht, das der zylindrische Schaft 27 des Kupplungsstücks 17 naturgemäß gegenüber der Innenoberfläche der Muffe 16 haben muss. Gut zu erkennen ist auch, dass diese Art der Kupplung den Belastungsstempel 3 dazu ertüchtigt, sowohl in die eine Richtung entlang seiner Längsachse L als auch in die entgegengesetzte Richtung verlustfrei Schwingungen auf den Fühlstempel 14 zu übertragen.

Gut zu erkennen ist auch, dass der Keil 20 im Bereich seines radial auswärtigen Endes formschlüssig an der Blattfeder 24 festgelegt ist. Zu diesem Zweck kann die Blattfeder 24 ein Fenster aufweisen. Durch dieses Fenster ragt der Keil hindurch. Die Blattfeder 24 zeichnet sich hier, wie man sieht, dadurch aus, dass nur ihr eines Ende eingespannt ist. Vorzugsweise dient zur Einspannung ihres Endes eine Art Rohrschelle 28. Diese greift örtlich um den Belastungsstempel 3 herum und hält an einer Seite das besagte Ende der Blattfeder 24 unbeweglich fest. Das gegenüberliegende Ende der Blattfeder 24 bildet vorzugsweise einen abgekröpften, jedenfalls relativ zur Längsachse L des Belastungsstempels schräg verlaufenden Abschnitt 29. Seine Funktion wird gleich noch näher erläutert.

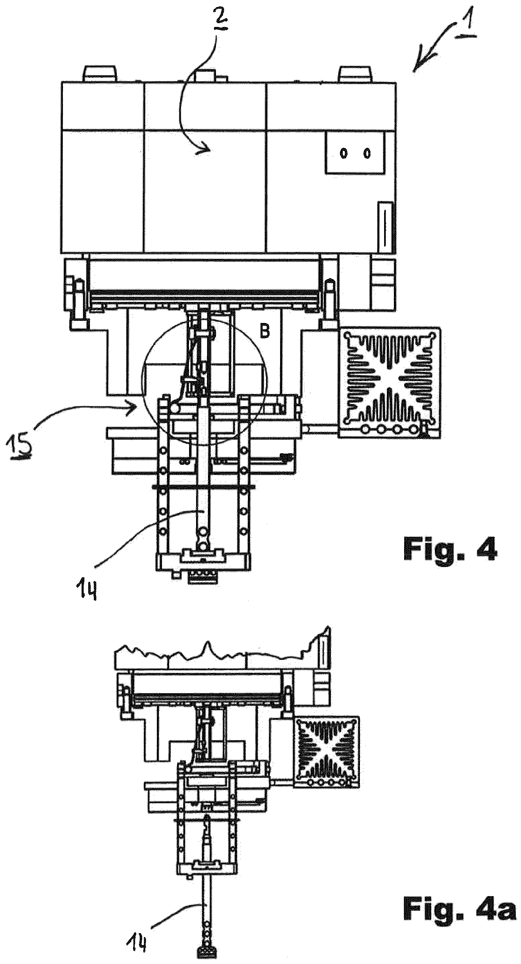

Die Figuren 4 und 4a zeigen, wenn man sie mit der Figur 1 vergleicht, recht anschaulich, auf welche Art und Weise der Belastungsstempel hier ferngesteuert motorisch gelöst werden kann. Die Figur 1 zeigt das Materialanalysegerät, wie erwähnt, in seinem betriebsbereiten Zustand. Der Schwingungserreger 2 kann anhand von nicht mehr zu erkennenden vertikalen Führungen auf und ab gefahren werden, motorisch, meist fernbedient. Diese Verfahrbarkeit dient eigentlich dazu, das Ende des Fühlstempels genau so positionieren zu können, dass es präzise an die Probe 4 angekuppelt werden kann. Diese Verfahrbarkeit wird hier nun aber erfindungsgemäß "zweckentfremdet" bzw. einem Zweitnutzen unterworfen. Wie man gut anhand der Figuren 4 und 4a nachvollziehen kann, wird der Schwingungserreger 2 zum Lösen der Kupplung 15 nach unten gefahren. Dabei läuft der schräg verlaufende Abschnitt 29 der Blattfeder irgendwann auf einen Anschlag 30 auf. Im Zuge des weiteren Nach-Unten-Fahrens des Schwingungserregers wird der schräg verlaufende Abschnitt 29 gerade wegen seiner keilartig wirkenden Schräge nach außen gebogen. Das bedeutet, dass die Blattfeder - hier im Uhrzeigersinn - geschwenkt wird. Sie zieht dabei den Keil 20 aus der Nut 18 heraus. Auf diese Art und Weise wird der Fühlstempel 14 entriegelt. Er kann nun aus dem Belastungsstempel 3 herausgezogen werden, so wie das die Figur 4a abbildet.

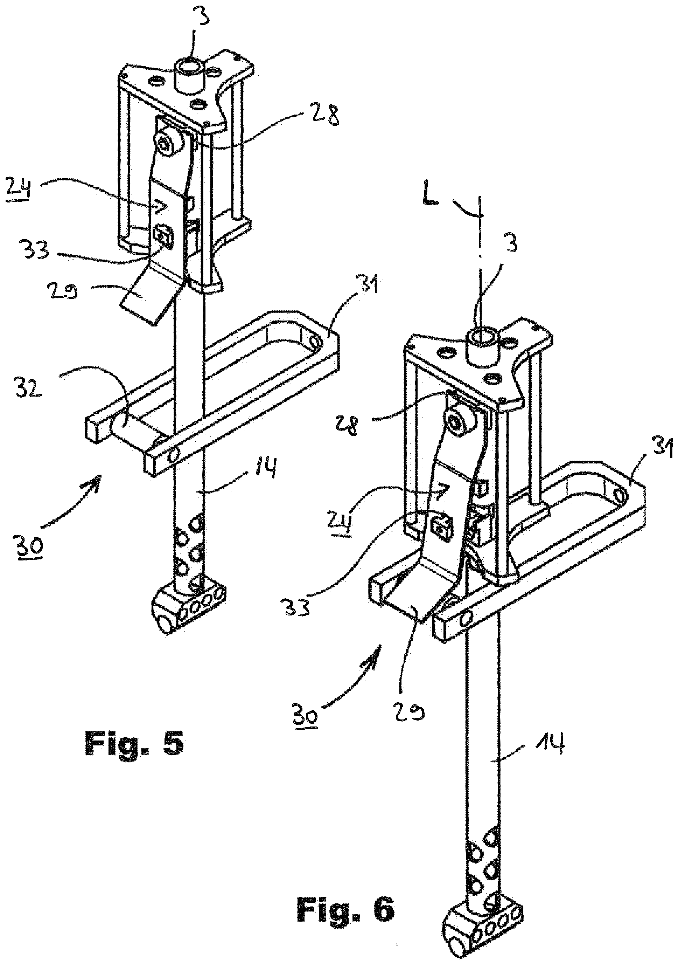

Die genaueren Einzelheiten zeigen die Figuren 5 und 6. Hier ist die an ihrem oberen Ende bevorzugt durch die Rohrschelle 28 eingespannt gehaltene Blattfeder 24 sehr gut zu erkennen. Der Anschlag 30 wird hier günstiger Weise durch den ortsfest am Materialanalysegerät montierten Haltebügel 31 gebildet, der eine Rolle 32 trägt.

Die Figur 5 zeigt das Ganze in der betriebsbereiten Position. Die Figur 6 zeigt das Ganze, nachdem der Schwingungserreger 2 weit genug heruntergefahren worden ist. Wie man sieht, rollt der schräg verlaufende Abschnitt 29 der Blattfeder 24 nun auf der Rolle 32 des Anschlags ab. Die Blattfeder 24 wird dadurch fast reibungslos nach außen gezogen.

Bemerkenswert ist noch, dass man an diesen Figuren auch die Verbindung zwischen dem Keil 20 und der Blattfeder 24 gut erkennen kann. Wie man hier sieht, trägt die Blattfeder 24 ein Fenster 33. Das Ende des Keils 20 ist formschlüssig an dem Fenster bzw. vorzugsweise zwischen zwei Laibungs-Seiten des Fensters festgelegt. Idealerweise wird der Keil zu diesem Zweck ein auf zwei gegenüberliegenden Seiten genutetes Ende aufweisen, wie man es in den Figuren 5 und 6 erkennt.

Bevorzugt ist der Querschnitt des Keils an seinem Ende nicht quadratisch, sondern rechteckig. Den gleichen rechteckigen Querschnitt bildet das Fenster 33 ab, aber um 90° gedreht. Auf diese Art und Weise kann der Keil bei der Montage so weit in das Fenster 33 eingeschoben werden, bis seine beiden genuteten Seiten auf der gleichen Höhe liegen wie die Leitung des Fensters 33. Dann wird der Keil 20 um 90° in seine Endposition gedreht Auf diese Art und Weise greifen nun zwei sich gegenüberliegende Laibungen des Fensters 33 in die beiden Nuten am Ende des Keils formschlüssig ein. Der Keil kann auf diese Art und Weise von der Blattfeder zwangsweise sowohl hin als auch her bewegt werden, senkrecht zur Längsachse L des Belastungsstempels. Natürlich sind noch andere Befestigungsarten denkbar, etwa eine Verschraubung des Keils mit der Blattfeder.

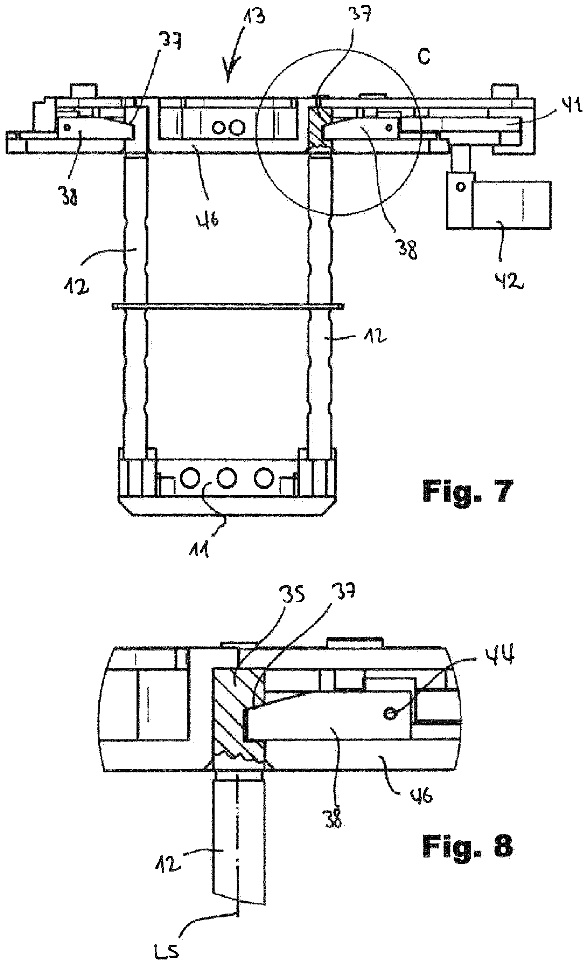

Wie die Säulen des Probenhalters am Deckel befestigt sind, sodass der Probenhalter von der Decke des Probenraums herab in den Probenraum hinein hängt, das zeigen am besten die Figuren 7 bis 12.

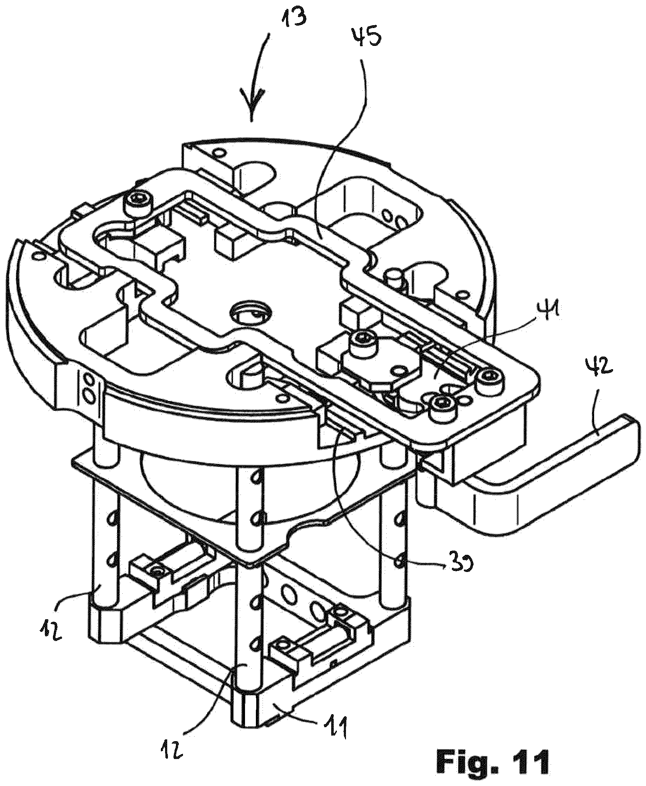

Die Figur 11 gibt einen Überblick über die Säulenverankerung 13, die ausweislich der Figur 1 den von der Probenkammer abgewandten äußersten Teil des Deckels 6 bildet. Die zu befestigenden Säulen ragen über Ausnehmungen im Deckel hindurch bis in den Bereich von dessen Außenseite, wo die Säulenverankerung angebracht ist. Das Ganze hat den Vorteil, dass die Säulenverankerung im Wesentlichen kalt, etwa auf Raumtemperatur, bleibt.

In dieser meist plattenartigen Säulenverankerung sind vollständig oder teilweise Sacklöcher vorgesehen. Von diesen Sacklöchern nimmt jeweils eines ein Kupplungsstück 35 der jeweiligen Säule 12 auf. Wie man sieht, wird unter dem Begriff Sackloch hier ein Loch verstanden, das einen Anschlag für die obere Stirnfläche des Kupplungsstücks 35 ausbildet. Das Kupplungsstück 35 trägt eine seitliche Nut 36. Die Nut 36 besitzt zumindest eine, dem Anschlag des Sacklochs zugewandte, eine Keilfläche 37 ausbildende Nutwange.

Das Kupplungsstück 35 wird festgesetzt, indem ein beweglicher Keil 38 eingeschoben wird. Es könnte ein Rundkeil sein. Ein Flachkeil, wie der hier figürlich dargestellte, ist aber deutlich zweckmäßiger. Mittels seiner bevorzugt oberseitigen Keilfläche, die mit der Keilfläche 37 an der Nutwange interagiert, wird das Kupplungsstück 35 zwischen dem Keil 38 und dem Anschlag des Sacklochs verspannt. Auf diese Art und Weise wird die betreffende Säule 12 in und entgegen der Richtung ihrer Längsachse LS immobilisiert. Bewegungen quer oder schräg zur Längsachse LS der Säule 12 verhindern die Umfangswände des Sacklochs. Der Keil 38 gleitet dabei auf seiner dem Probenraum zugewandten Seite auf einer Planfläche der Säulenverankerung 13. Er hat im Regelfall auch plane Seiten, an denen seine Seitenführung erfolgt.

Jeder Säule 12 ist individuell eine derartige Keilkupplung zugeordnet.

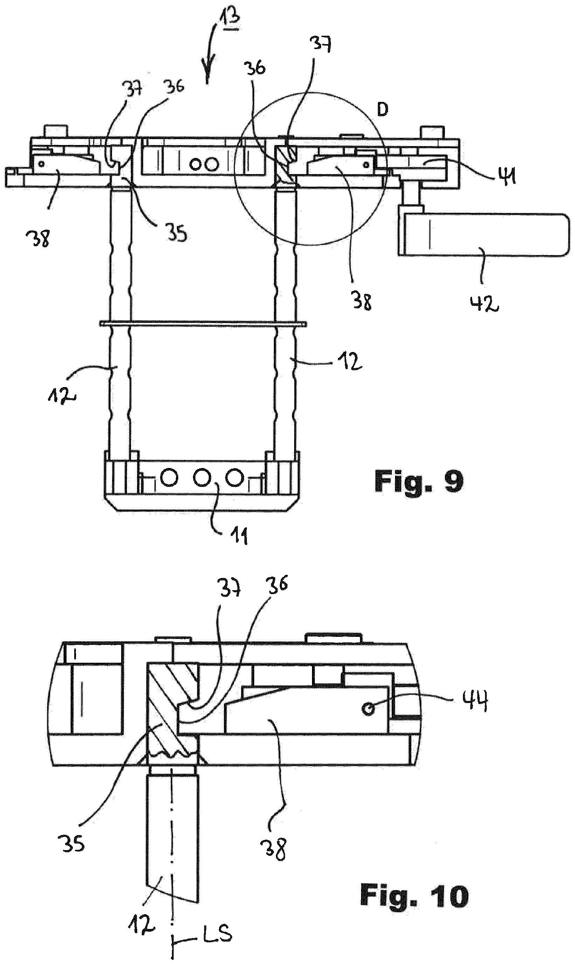

Eine optionale Besonderheit ist die, dass die vier bzw. mehreren Keile synchron betätigt werden. Hierzu ist eine Synchronbetätigungsmimik vorgesehen. Diese ist dazu in der Lage, die Keile so zurückzuziehen, wie in den Figuren 9 und 10 gezeigt. Die Keilspitze kommt dann völlig außer Eingriff mit der Nut 36.

Der Probentisch 11 kann dann mitsamt den Säulen 12 nach unten abgenommen werden.

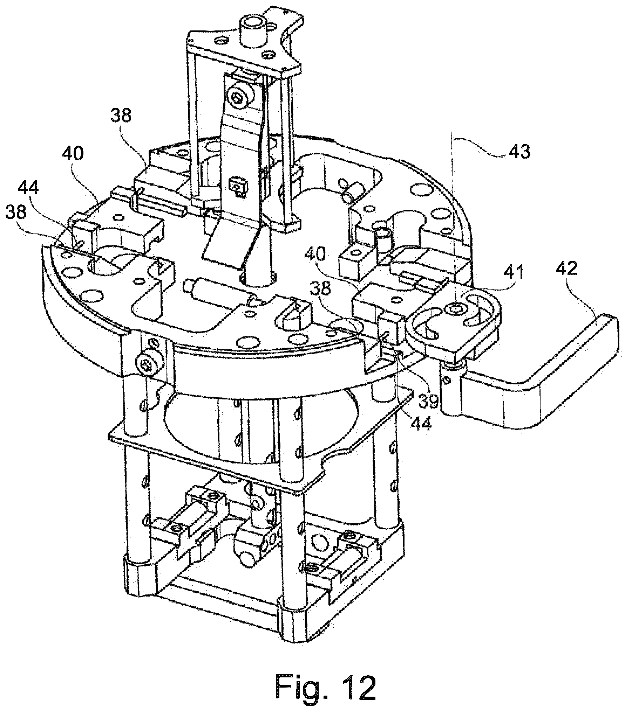

Den Aufbau der Synchronbetätigungsmimik, die hier Bestandteil der Säulenverankerung ist, zeigen am besten die Figuren 11 und 12.

Der Leser wendet sich des einfacheren Verständnisses halber bitte zuerst der Figur 12 zu.

Diverse Bauteile, die in Figur 11 noch zu sehen sind und die die Sicht auf die entscheidenden Dinge versperren, sind in Figur 12 weggeschnitten. Wie man sieht, laufen die Keile 38 hier in einer Nut bzw. einer begrenzten Vertiefung auf dem Teller 46 hin und her. Der Teller 46 ist hier Bestandteil der Säulenverankerung 13. Zu diesem Zweck sind, wie man relativ gut erkennen kann, bevorzugt seitliche Führungsleisten 39 neben jedem Keil vorgesehen. Jeweils zwei Keilen 38 ist ein gemeinsamer Betätigungsschieber 40 zugeordnet.

Bei genauem Hinsehen sieht man, dass jeder Keil über ein lang gestrecktes zylindrisches Element mit dem Betätigungsschieber 40 verbunden ist. Dabei endet das lang gestreckte zylindrische Element an einer der langen schmalen Seitenflächen des Keils. Das lang gestreckte zylindrische Element ist ein Federelement, vorzugsweise in Gestalt einer Biegestabfeder.

Zusätzlich ist in den Teller 46 ein Doppelexzenter 41 schwenkbar gelagert. Mithilfe seines Schwenkgriffs 42 kann der Doppelexzenter 41 um die Exzenterachse 43 gedreht werden. Sobald man den Schwenkgriff 42 zur Betätigung des Doppelexzenters 41 im Uhrzeigersinn dreht, drückt ein Exzenter - nämlich hier der dem Betrachter zugewandte Exzenter - des Doppelexzenters 41 auf den Betätigungsschieber 40. Der Betätigungsschieber 40 wird dadurch im vorliegenden Fall nach links gedrückt. Infolgedessen werden die jeweils über eine Biegestabfeder 44 mit dem Betätigungsschieber 40 verbundenen Keile 38 aus ihrer geöffneten Position in ihre Schließposition gedrückt.

Wenn man nun die Figuren 11 und 12 nebeneinander betrachtet, dann versteht man, wie die Synchronbetätigungsmimik funktioniert. Zu ihr gehört nämlich der Synchronbetätigungsrahmen 45. Gegen dessen hier rechtes Ende liegt der zweite Exzenter des Doppelexzenters 41 von innen her an. Die gleiche Bewegung des Doppelexzenters, die den einen ihm zugewandten Betätigungsschieber 40 im vorliegenden Fall nach links bewegt, führt dazu, dass der Synchronbetätigungsrahmen 45 vom zweiten Exzenter gezogen wird, im hier figürlich dargestellten Fall nach rechts. Diese ziehende Bewegung setzt sich über die gesamte Säulenverankerung 13 hinweg fort, bis in den Bereich von deren linken Betätigungsschieber 40. Dieser linke Betätigungsschieber 40 wird dann von dem Synchronbetätigungsrahmen von links nach rechts gezogen. Dabei schiebt er die mit ihm ebenfalls über Biegestabfedern verbundenen Keile 38 von ihrer geöffneten Position nach rechts in ihre geschlossene Position.

Auf diese Art und Weise kann der Wechsel eines Probentisches oder eines Probenquerträgers 11 einfach und handlich vonstattengehen. Nach dem Ausbau des Compartments, das die Probenkammer 5 abgrenzt, wird der Probentisch oder Probenquerträger 11 mit einer Hand gehalten, die andere Hand legt den Schwenkgriff 42 um 90° um. Daraufhin kann der Probentisch bzw. Probenquerträger 11 mit einer Hand nach unten entnommen werden.

### BEZUGSZEICHENLISTE

- 1: Materialanalysegerät
- 2: Schwingungserreger
- 3: Belastungsstempel
- 4: Probe
- 5: Probenkammer
- 6: Deckel
- 7: Kühlplatte
- 8: Isolation
- 9: Deckelheizung
- 10: Probenhalter
- 11: Probentisch/Probenquerträger
- 12: Säule zum Halten des Probenhalters
- 13: Säulenverankerung
- 14: Fühlstempel bzw. Verbindungsglied
- 15: Kupplung zwischen Fühlstempel und Belastungsstempel
- 16: Kupplungshülse bzw. Muffe des Belastungsstempels
- 17: Kupplungsstück
- 18: Nut
- 19: Fenster
- 20: Keil
- 21: Gleitfläche
- 22: Keilfläche des Keils
- 23: Gegenkeilfläche des Kupplungsstücks 17
- 24: Blattfeder
- 25: Außenkegel
- 26: Kegelsitz der Muffe 16
- 27: zylindrischer Schaft des Kupplungsstücks 17
- 28: Rohrschelle
- 29: schräg verlaufender Abschnitt der Blattfeder
- 30: Anschlag
- 31: Haltebügel
- 32: Rolle
- 33: Fenster
- 34: Kühlgerät
- 35: Kupplungsstück
- 36: Nut
- 37: Keilfläche
- 38: Keil
- 39: seitliche Führungsleiste
- 40: Betätigungsschieber
- 41: Dreh- bzw. Doppelexzenter
- 42: Schwenkgriff
- 43: Exzenterachse
- 44: Biegestabfedern
- 45: Synchronbetätigungsrahmen
- 46: Teller

- L: Längsachse Stempel
- LS: Längsachse Säule 12

## Patentansprüche

1. Materialanalysegerät (1) zur Analyse einer Werkstoffprobe, mit einer Probenkammer (5), einem Probenhalter, mindestens einer Säule (12), einem Erreger (2), einem Belastungsstempel (3) und einem Fühlstempel (14), wobei der Probenhalter von der mindestens einen Säule (12) getragen in die Probenkammer (5) hineinragt, wobei der Belastungsstempel (3) an seinem einen Ende von dem Erreger (2) mit Kraft beaufschlagt wird und an seinem anderen Ende den Fühlstempel (14) trägt, mit dem er in definierter Art und Weise Kraft auf die Probe (4) überträgt und diese dadurch belastet, **dadurch gekennzeichnet, dass** der Belastungsstempel (3) an einem der Probenkammer (5) zugewandten Enden eine Muffe (16) ausbildet, die in betriebsfertigem Zustand einen Einsteckabschnitt des Fühlstempels (14) in sich aufnimmt, wobei das Materialanalysegerät (1) einen Keil (20) aufweist, wobei die Muffe (16) zumindest ein seitliches Fenster besitzt, durch das hindurch der Keil (20), vorzugsweise in Gestalt eines Flachkeils mit einer ebenen Keilfläche (22), in eine dahinterliegende Nut (18) am Einsteckabschnitt eingeschoben werden kann, mittels dessen der Fühlstempel (14) spielfrei am Belastungsstempel (3) festgesetzt wird.

2. Materialanalysegerät (1) nach Anspruch 1, wobei die Probenkammer (5) durch einen Deckel (6) verschließbar ist, und das Materialanalysegerät (1) einen Probenhalter aufweist, der am Deckel (6) befestigt ist und dann von diesem getragen in die Probenkammer (5) hineinragt.

3. Materialanalysegerät (1) nach Anspruch 1 oder 2, **dadurch gekennzeichnet, dass** die Muffe (16) des Belastungsstempels (3) einen ersten Zentrierkegel, vorzugsweise in Gestalt eines Zentrierkegelsitzes, ausbildet, der im Zusammenspiel mit einem zweiten, vorzugsweise männlichen Zentrierkegel am Einsteckabschnitt des Fühlstempels (14) letzteren gegenüber dem Belastungsstempel (3) zentriert.

4. Materialanalysegerät (1) nach Anspruch 3, **dadurch gekennzeichnet, dass** der Keil (20) und die Nut am Einsteckabschnitt des Fühlstempels (14) so ausgebildet sind, dass der Keil (20) im Zuge seines Einführens in die besagte Nut den männlichen Zentrierkegel am Einsteckabschnitt des Fühlstempels (14) in den Zentrierkegelsitz der Muffe (16) zieht.

5. Materialanalysegerät (1) nach einem der vorhergehenden Ansprüche, **dadurch gekennzeichnet, dass** an der Außenseite des Belastungsstempels (3) eine Biegefeder vorzugsweise nach Art einer an ihrem einen Ende festgelegten Blattfeder (24) befestigt ist, die den Keil (20) in radialer Richtung in Richtung hin zum Belastungsstempel (3) vorspannt.

6. Materialanalysegerät (1) nach Anspruch 5, **dadurch gekennzeichnet, dass** der Keil (20) an seinem radial auswärtigen Ende derart mit der Blattfeder (24) verbunden ist, dass diese auch Zugkräfte auf ihn übertragen kann.

7. Materialanalysegerät (1) nach Anspruch 5 oder 6, **dadurch gekennzeichnet, dass** der Keil (20) nach Art eines Bajonettverschlusses formschlüssig mit der Blattfeder (24) verbunden ist.

8. Materialanalysegerät (1) nach einem der Ansprüche 5 bis 7, **dadurch gekennzeichnet, dass** die Blattfeder (24) ein verlängertes, vorzugsweise radial schräg nach außen gekröpftes freies Ende aufweist, das in Richtung der Längsachse (L) des Belastungsstempels (3) über den Keil (20) hinausragt, und das beim Weitereinfahren des Belastungsstempels (3) in den Probenraum (5) gegen einen Abschlag anläuft, sodass die Blattfeder (24) in radialer Richtung nach außen gespreizt wird und den Keil (20) derart aus der Nut (18) herauszieht, dass der Fühlstempel (14) vom Belastungsstempel (3) abgenommen werden kann.

9. Materialanalysegerät (1) nach Anspruch 2, **dadurch gekennzeichnet, dass** die Probenkammerwand, in Gestalt ihres Deckels (6), für eine oder mehrere Säulen (12) des Probenhalters jeweils eine Halteöffnung aufweist, in die das freie Ende der jeweiligen Säule (12) eingeschoben werden kann, wobei das freie Ende der betreffenden Säule (12) eine Nut trägt, in die ein beweglich im Deckel (6) gelagerter Keil (20) eingeschoben werden kann, sodass das Ende der Säule (12) formschlüssig spielfrei am Deckel (6) verankert ist.

10. Materialanalysegerät (1) nach Anspruch 9, **dadurch gekennzeichnet, dass** die Halteöffnung ganz oder teilweises als Sackloch ausgeführt ist, derart, dass der im Deckel (6) gelagerte Keil (20) das freie Ende der ihm zugeordneten Säule (12) zwischen seiner Keilfläche (22) und dem Grund des Sacklochs verspannt.

11. Materialanalysegerät (1) nach Anspruch 9 oder 10, **dadurch gekennzeichnet, dass** in den Deckel (6) eine Synchronbetätigungsmimik integriert ist, die alle Keile (38) synchron betätigt, d. h. in die Nuten (36) der Säulen (12) einschiebt oder aus ihnen herauszieht, wobei die Synchronbetätigungsmimik einen Drehexzenter (41) umfasst, der bei entsprechender Drehung eine Druckkraft auf mindestens einen Keil (38) ausübt, die diesen in eine Nut (36) einer Säule (12) zwängt, und gleichzeitig Zug auf einen Synchronbetätigungsrahmen (45) ausübt, der, wenn er hierdurch in eine andere Position gezogen wird, seinerseits eine Druckkraft auf mindestens einen zweiten Keil (38) ausübt, die diesen in eine Nut (36) einer anderen Säule (12) zwängt.

12. Materialanalysegerät (1) nach Anspruch 11, **dadurch gekennzeichnet, dass** die Keile (38) nicht unmittelbar, sondern über Federelemente, vorzugsweise in Gestalt von Biegestabfedern (44), mit dem Drehexzenter (41) und dem Synchronbetätigungsrahmen (45) kommunizieren.

13. Materialanalysegerät (1) nach einem der Ansprüche 1 bis 12, mit einer temperierbaren Probenkammer (5), sowie einem außerhalb der Probenkammer (5) angeordneten Messsystem, **dadurch gekennzeichnet, dass** mindestens ein Bereich außerhalb der Probenkammer (5) zwischen Probenkammer (5) und dem Messsystem selbsttätig durch ein auf Wärmerohrtechnologie basierendes Kühlsystem gekühlt wird, indem mindestens ein Wärmerohr vorgesehen ist, das innen hohl und hermetisch abgedichtet ist und in dem selbsttätig ein Kühlfluid zirkuliert, wobei das wärmeaufnehmende Ende des Wärmerohrs wärmeleitend mit dem zu kühlenden Wandbereich verbunden ist und das wärmeabgebende Ende des Wärmerohrs mit einem Kühlkörper verbunden ist und/oder äußerlich mit Kühlmittel zwangsangeströmt wird.

14. Materialanalysegerät (1) nach einem der Ansprüche 1 bis 13, **dadurch gekennzeichnet, dass** die Probenkammer (5) von ihrer Oberseite her beladbar ist.

15. Materialanalysegerät (1) nach einem der Ansprüche 1 bis 14, **dadurch gekennzeichnet, dass** die Probenkammer (5) temperierbar ist.

## Claims

1. A material analysis device (1) for analyzing a material sample, with a sample chamber (5), a sample holder, at least one column (12), an exciter (2), a loading shaft (3) and a probing shaft (14), wherein the sample holder, supported by the at least one column (12), protrudes into the sample chamber (5), wherein the exciter (2) applies a force to the loading shaft (3) at its one end and, at its other end, supports the probing shaft (14), by means of which it transmits force to the sample (4) in a defined manner and thereby loads said sample, **characterized in that,** at an end facing the sample chamber (5), the loading shaft (3) forms a bushing (16), which accommodates an insertion section of the probing shaft (14) in the ready-for-use state, wherein the material analysis device (1) has a key (20), wherein the bushing (16) has at least one lateral window, through which the key (20), preferably in the form of a flat key with a flat key surface (22), can be inserted into a groove (18) lying behind it on the insertion section, by means of which the probing shaft (14) is fixed to the loading shaft (3) without play.

2. The material analysis device (1) according to claim 1, wherein the sample chamber (5) can be closed by means of a cover (6), and the material analysis device (1) has a sample holder, which is fastened to the cover (6) and then, supported by the latter, protrudes into the sample chamber (5).

3. The material analysis device (1) according to claim 1 or 2, **characterized in that** the bushing (16) of the loading shaft (3) forms a first centering taper, preferably in the form of a centering taper seat, which, in combination with a second, preferably male centering taper on the insertion section of the probing shaft (14), centers the latter with respect to the loading shaft (3).

4. The material analysis device (1) according to claim 3, **characterized in that** the key (20) and the groove on the insertion section of the probing shaft (14) are formed so that the key (20), as part of being inserted into said groove, pulls the male centering taper on the insertion section of the probing shaft (14) into the centering taper seat of the bushing (16).

5. The material analysis device (1) according to one of the preceding claims, **characterized in that** a flexible spring, preferably in the manner of a leaf spring (24), which is fixed at its one end and which preloads the key (20) in the radial direction in the direction towards the loading shaft (3), is fastened to the outer side of the loading shaft (3).

6. The material analysis device (1) according to claim 5, **characterized in that** the key (20) is connected at its radially outward end to the leaf spring (24) in such a way that the latter can also transmit tensile forces to said key.

7. The material analysis device (1) according to claim 5 or 6, **characterized in that** the key (20) is interlockingly connected to the leaf spring (24) in the manner of a bayonet closure.

8. The material analysis device (1) according to one of claims 5 to 7, **characterized in that** the leaf spring (24) has an elongated free end preferably bent at right angles radially obliquely outwardly, which protrudes beyond the key (20) in the direction of the longitudinal axis (L) of the loading shaft (3), and which, when the loading shaft (3) moves further into the sample chamber (5), runs up against a stop, so that the leaf spring (24) is spread outwards in the radial direction and pulls the key (20) out of the groove (18) in such a way that the probing shaft (14) can be removed from the loading shaft (3).

9. The material analysis device (1) according to claim 2, **characterized in that** the sample chamber wall, in the form of its cover (6), has a respective holding opening for one or several columns (12) of the sample holder, into which the free end of the respective column (12) can be inserted, wherein the free end of the respective column (12) supports a groove, into which a key (20) mounted movably in the cover (6) can be inserted, so that the end of the column (12) is interlockingly anchored on the cover (6) without play.

10. The material analysis device (1) according to claim 9, **characterized in that** the holding opening is embodied completely or partially as blind hole in such a way that the key (20) mounted in the cover (6) braces the free end of the column (12) assigned to it between its key surface (22) and the bottom of the blind hole.

11. The material analysis device (1) according to claim 9 or 10, **characterized in that** a synchronous actuation mechanism, which actuates all keys (38) synchronously, i.e. inserts them into or pulls them out of the grooves (36) of the columns (12), is integrated in the cover (6), wherein the synchronous actuation mechanism comprises a rotary eccentric (41), which, during corresponding rotation, exerts a compressive force on at least one key (38), which forces the latter into a groove (36) of a column (12), and simultaneously exerts tension on a synchronous actuation frame (45), which, when pulled into a different position thereby, in turn exerts a compressive force on at least one second key (38), which forces the latter into a groove (36) of a different column (12).

12. The material analysis device (1) according to claim 11, **characterized in that** the keys (38) do not communicate directly with the rotary eccentric (41) and the synchronous actuation frame (45), but via spring elements, preferably in the form of flexible bar springs (44) .

13. The material analysis device (1) according to one of claims 1 to 12, with a temperature-controllable sample chamber (5) as well as a measuring system arranged outside of the sample chamber (5), **characterized in that** at least one region outside of the sample chamber (5) between sample chamber (5) and the measuring system is cooled automatically by a cooling system based on heat pipe technology, **in that** at least one heat pipe is provided, which is hollow on the inside and which is hermetically sealed and in which a cooling fluid circulates automatically, wherein the heat-absorbing end of the heat pipe is connected in a thermally conductive manner to the wall region to be cooled and the heat-emitting end of the heat pipe is connected to a cooling body and/or coolant flows against it by force externally.

14. The material analysis device (1) according to one of claims 1 to 13, **characterized in that** the sample chamber (5) can be loaded from its top side.

15. The material analysis device (1) according to one of claims 1 to 14, **characterized in that** the sample chamber (5) can be temperature-controlled.

## Revendications

1. Dispositif d'analyse de matières (1), destiné à analyser un échantillon de matériau, pourvu d'une chambre d'échantillons (5), d'un porte-échantillon, d'au moins une colonne (12), d'un excitateur (2), d'un poinçon de charge (3) et d'un poinçon détecteur (14), le porte-échantillon, porté par l'au moins une colonne (12) saillant à l'intérieur de la chambre d'échantillons (5), sur l'une de ses extrémités, le poinçon de charge (3) étant contraint par une force par l'excitateur (2) et sur son autre extrémité, portant le poinçon détecteur (14) à l'aide duquel il transmet d'une manière définie une force sur l'échantillon (4) et le charge de ce fait, **caractérisé en ce que** sur une extrémité qui fait face à la chambre d'échantillons (5), le poinçon de charge (3) constitue un manchon (16), qui dans l'état prêt à l'utilisation réceptionne en lui un segment d'insertion du poinçon détecteur (14) le dispositif d'analyse de matières (1) comportant une clavette (20), le manchon (16) détenant au moins une fenêtre latérale, à travers laquelle la clavette (20), de préférence conformée en tant qu'une clavette plate peut être introduite par une surface de clavette (22) plane dans une rainure (18) située derrière elle sur le segment d'insertion, au moyen de quoi le poinçon détecteur (14) peut être immobilisé sans jeu sur le poinçon de charge (3).

2. Dispositif d'analyse de matières (1) selon la revendication 1, la chambre d'échantillons (5) pouvant se fermer par un couvercle (6) et le dispositif d'analyse de matières (1) comportant un porte-échantillon, qui est fixé sur le couvercle (6) et qui porté par celui-ci, saillit ensuite à l'intérieur de la chambre d'échantillons (5).

3. Dispositif d'analyse de matières (1) selon la revendication 1 ou 2, **caractérisé en ce que** le manchon (16) du poinçon de charge (3) constitue un premier cône de centrage, de préférence conformé en tant que siège de centrage conique, qui en coopération avec un deuxième cône de centrage, de préférence mâle sur le segment d'insertion du poinçon détecteur (14) centre ce dernier par rapport au poinçon de charge (3).

4. Dispositif d'analyse de matières (1) selon la revendication 3, **caractérisé en ce que** la clavette (20) et la rainure sur le segment d'insertion du poinçon détecteur (14) sont conçues de telle sorte qu'au cours de son introduction dans la rainure citée, la clavette (20) tire le cône de centrage mâle sur le segment d'insertion du poinçon détecteur (14) dans le siège de centrage conique du manchon (16).

5. Dispositif d'analyse de matières (1) selon l'une quelconque des revendications précédentes, caractérisé en ce sur la face extérieure du poinçon de charge (3) est fixé un ressort de flexion, de préférence à la manière d'un ressort à lame (24) immobilisé sur l'une de ses extrémités, qui précontraint la clavette (20) en direction, radiale, en direction vers le poinçon de charge (3).

6. Dispositif d'analyse de matières (1) selon la revendication 5, **caractérisé en ce que** sur son extrémité extérieure en direction radiale, la clavette (20) est assemblée avec le ressort à lame (24), de telle sorte que celui-ci puisse aussi transmettre des forces de traction.

7. Dispositif d'analyse de matières (1) selon la revendication 5 ou 6, **caractérisé en ce que** la clavette (20) est assemblée par complémentarité de forme, à la manière d'un verrouillage par baïonnette avec le ressort à lame (24).

8. Dispositif d'analyse de matières (1) selon l'une quelconque des revendications 5 à 7, **caractérisé en ce que** le ressort à lame (24) comporte une extrémité libre rallongée, de préférence coudée en oblique vers l'extérieur en direction radiale, qui en direction de l'axe longitudinal (L) du poinçon de charge (3) saillit au-delà de la clavette (20) et **en ce que** lorsque le poinçon de charge (3) entre plus loin dans l'espace d'échantillons (5) aborde une butée, de telle sorte que le ressort à lame (24) soit écarté vers l'extérieur en direction radiale et tire la clavette (20) hors de la rainure (18), de telle sorte que le poinçon détecteur (14) puisse être enlevé par le poinçon de charge (3).

9. Dispositif d'analyse de matières (1) selon la revendication 2, **caractérisé en ce que** la paroi de la chambre d'échantillons sous la conformation de son couvercle (6) comporte pour une ou plusieurs colonnes (12) du porte-échantillon chaque fois un orifice de maintien, dans lequel l'extrémité libre de la colonne (12) respective peut être insérée, l'extrémité libre de la colonne (12) concernée portant une rainure, dans laquelle peut être insérée une clavette (20) logée de manière mobile dans le couvercle (6), de telle sorte que l'extrémité de la colonne (12) soit ancrée sans jeu, par complémentarité de forme sur le couvercle (6) .

10. Dispositif d'analyse de matières (1) selon la revendication 9, **caractérisé en ce que** l'orifice de maintien est conçu entièrement ou partiellement en tant que trou borgne, de telle sorte que la clavette (20) logée dans le couvercle (6) serre l'extrémité libre de la colonne (12) qui lui est associée entre sa surface de clavette (22) et le fond du trou borgne.

11. Dispositif d'analyse de matières (1) selon la revendication 9 ou 10, **caractérisé en ce que** dans le couvercle (6) est intégré un mécanisme d'actionnement synchrone, qui actionne de manière synchrone toutes les clavettes (38), c'est-à-dire les insère dans les rainures (36) des colonnes (12) ou les en extrait, le mécanisme d'actionnement synchrone comprenant un excentrique rotatif (41), qui lors d'une rotation correspondante exerce sur l'au moins une clavette (38) une force de pression, qui force celle-ci dans une rainure (36) d'une colonne (12), et qui exerce simultanément une traction sur un cadre d'actionnement synchrone (45), qui lorsqu'il est tiré dans une autre position de ce fait, exerce pour sa part sur au moins une deuxième clavette (38) une force de pression qui force celle-ci dans une rainure (36) d'une autre colonne (12).

12. Dispositif d'analyse de matières (1) selon la revendication 11, **caractérisé en ce que** les clavettes (38) ne communiquent pas directement, mais par l'intermédiaire d'éléments à ressort, conformés de préférence en tant que ressorts de flexion (44) en forme de barres avec l'excentrique rotatif (41) et le cadre d'actionnement synchrone (45).

13. Dispositif d'analyse de matières (1) selon l'une quelconque des revendications 1 à 12, pourvu d'une chambre d'échantillons (5) tempérable, ainsi que d'un système de mesure placé à l'extérieur de la chambre d'échantillons (5), **caractérisé en ce qu'**au moins une zone à l"extérieur de la chambre d'échantillons (5) entre la chambre d'échantillons (5) et le système de mesure est refroidie automatiquement par un système de refroidissement basé sur la technologie des tubes caloporteurs, **en ce qu'**il est prévu au moins un tube caloporteur, qui est creux et hermétiquement étanche à l'intérieur et dans lequel circule automatiquement un fluide réfrigérant, l'extrémité absorbant la chaleur du tube caloporteur étant assemblée de manière thermoconductrice avec la zone de paroi qui doit être refroidie et l'extrémité restituant la chaleur du tube caloporteur étant assemblée avec un dissipateur thermique et / ou étant soumise à une affluence de force par l'extérieur par de l'agent réfrigérant.

14. Dispositif d'analyse de matières (1) selon l'une quelconque des revendications 1 à 13, **caractérisé en ce que** le chambre d'échantillons (5) est susceptible d'être chargée par sa face supérieure.

15. Dispositif d'analyse de matières (1) selon l'une quelconque des revendications 1 à 14, **caractérisé en ce que** la chambre d'échantillons (5) est tempérable.
